# EUROPEAN PATENT SPECIFICATION

(11) **EP 0 829 417 B1**
(45) Date of publication and mention of the grant of the patent: **23.01.2002**
(21) Application number: 97830444.2
(22) Date of filing: 09.09.1997
(51) Int. Cl.: B62D 31/00

(54) **Electrically propelled small vehicle**
Elektrisch angetriebener Kleinwagen
Véhicule de petites dimensions à propulsion électrique

(30) Priority: 11.09.1996 IT FI960210
(43) Date of publication of application: 18.03.1998
(73) Proprietor: D'Ascanio, Giacomo, 56125 Pisa (IT)
(72) Inventor: D'Ascanio, Giacomo, 56125 Pisa (IT)
(74) Representative: Mannucci, Michele

(56) References cited:
- EP-A- 0 176 485
- DE-A- 4 306 094
- DE-A- 4 329 859
- FR-A- 2 387 139

## Description

With improved standards of living and the consequent increase in motor vehicle traffic, driving - and especially parking - in towns has become a serious problem, so much so that people are now using two or even three transport means to get to where they want to go (driving to town and parking the car on the outskirts, then continuing their journey by public transport and lastly - if necessary - completing their journey on foot for long stretches). The only vehicle that is universally accepted and actively promoted everywhere by the Authorities, and which allows you to travel door to door, is the bicycle. The reasons behind its popularity are to be found in three specific advantages characteristic of bicycles: the lack of both chemical and noise pollution; the small amount of space they take up on the road - from the front, the width of only one person plus the space either side needed for safety reasons for the dynamic stability of all two-wheeled vehicles and, longitudinally, approximately two metres; and lastly the fact that they can easily be pushed around pedestrianized areas.

FR 2 387 139 A comprises the features mentioned in the preamble of claim 1 of the present application.

A motor vehicle which attempts to at least reduce some of the disadvantages of common cars is known from DE-A-4306094.

The object of the invention is to provide a motor vehicle which intrinsically has all three characteristics of a bicycle as set forth above. This object is achieved with the combination of features of claim 1. Additional advantageous features are set forth in the dependent claims.

Essentially the motor vehicle of the invention, which has a conventional structure - i.e. with four wheels and a passenger compartment-possesses the following combined characteristics:
- it does not cause either chemical or noise pollution since it is driven by an electric motor or motors powered by a battery or equivalent system such as a supercapacitor or an electric superflywheel;
- it takes up approximately as much space on the road as a bicycle since, in the car version, the two passengers sit in tandem, with one sitting partly between the legs of the other - as on two-wheeled vehicles - and, in the van version, its size is reduced to an equivalent degree;
- and lastly, in pedestrianized areas, once the driver has dismounted it can easily be moved manually, even uphill, since the controls which allow the car to advance at walking speed are positioned on the steering wheel and are accessible from the outside.

The electric motor, which is built into each of the drive wheels, can be of the synchronous type, with a rotor fitted with permanent magnets and with an encoder that measures the angular position of the said permanent magnets with respect to the stator housing the windings, the encoder data being processed by the motor's electronic control unit.

The rechargeable electric batteries will advantageously be located under the seats, in the floor of the vehicle.

In order to free the vehicle from the constraints of having a limited range, which is common to all battery-powered vehicles, an optional generator unit can be installed consisting of an internal combustion engine or a turbine or fuel cells which use a liquid fuel of the type already on sale or which could be sold at existing petrol stations. This solution is known as a hybrid embodiment, as opposed to the solely electric version.

Other specific characteristics will be dear on reading the following text and are described in the appended claims which form an integral part of the present description.

A better understanding of the invention will be gained by following the description and the appended drawing which shows a practical non-limiting example of the said invention. In the drawing:
Fig. 1 shows a diagrammatic side view of the vehicle in question;
Fig. 2 shows a cross-section thereof, approximately on the plane II-II in Fig. 1;
Fig. 3 shows a diagrammatic plan view similar to Fig. 2, illustrating the option of moving at walking speed;
Fig. 4 shows a cross-section on a diametral plane of a drive wheel;
Fig. 5 shows the position of the advance and stop control buttons located on the steering wheel; and
Figs 6 and 7 show an enlarged cross-section on VI-VI in Fig. 2, i.e. a local cross-section of the door, and a cross-section on VII-VII in Fig. 6.

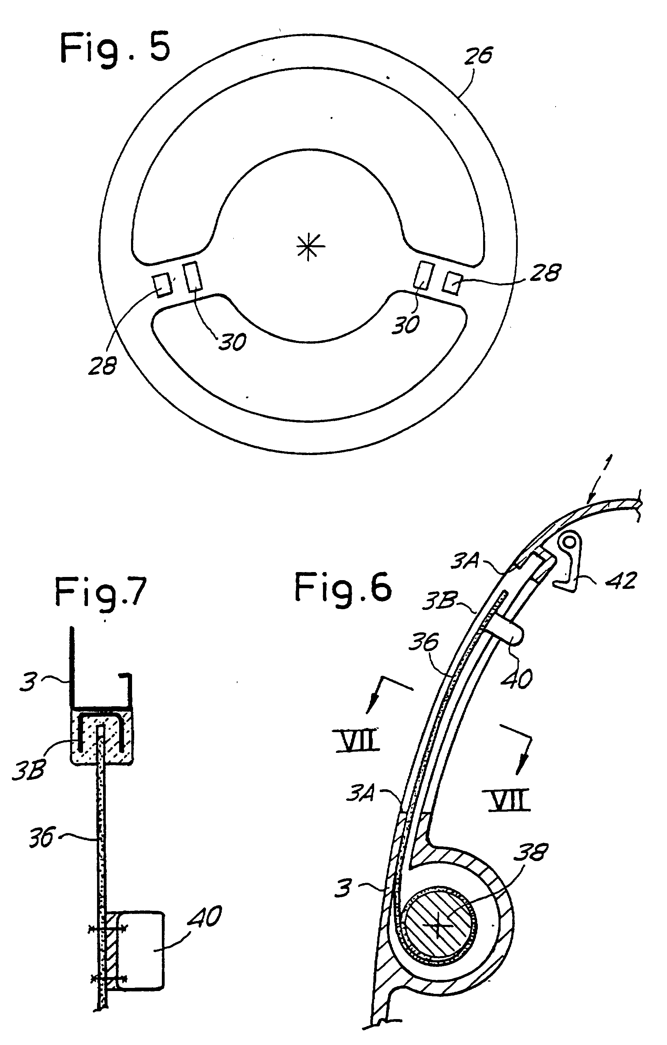

In a highly diagrammatic manner, the reference numeral 1 denotes the body of a passenger compartment having very small dimensions which, in practice, are: a maximum length A of about 220 cm; a length B of approximately 180 cm, i.e. the maximum length taken up by the vehicle when parked transverse to the road, with its front wheels up against the kerb; a vehicle width C of about 100 cm or less; and a height D of about 140/150 cm. The passenger compartment can accommodate two seats S1 and S2 for two people sitting in tandem, essentially positioned like two passengers on a motorcycle or equivalent vehicle; the front seat S1 can flip forwards in order to make it easier for the passenger who is to sit in the rear seat S2 to get in. The body of the passenger compartment will be fitted with appropriate bumpers of the energy-absorbing type or of another known and equivalent type. The reference 3 denotes two side doors which are wide enough to allow easy access to the two tandem seats described above. The references 5 and 7 denote the front wheels and the rear wheels respectively. Advantageously, the front wheels can be driven wheels as well as steered wheels. They will be of a specific type, as illustrated for example in Fig. 4, in which the reference 9 denotes the hub on which the bearings 10 for the wheel 12 will be provided, the latter being of a type advantageously accommodating a tyre with a relatively wide tread. The wheel 12 with a hub cap 12A will be designed so as to constitute an electric motor having permanent magnets 14 integral with the wheel and windings 16 for stator excitation, the stator being mounted on the hub 9. The motor is therefore of synchronous type, the permanent-magnet rotor being integral with the wheel and the stator being mounted inside the wheel.

An encoder 18 is designed to measure the angular position of the wheel, and therefore of the permanent magnets 14, with respect to the internal stator on which the windings 16 are mounted. The encoder data will expediently be sent to an electronic unit which is designed to process these data in order to determine which commands to send to the motor and in particular the excitation level of the windings 16 in order to start rotation. The two front steered and driven wheels 5 will each be fitted with a motor as described above, so that there is no longer any need for mechanical transmission and in particular for the differential gearing for the wheels and the joints for ensuring the orientation of the steered wheels.

Moreover, the possibility of alternatively or additionally motorizing the rear wheels is not excluded. In economical versions, a single wheel - one of the rear wheels - could be motorized.

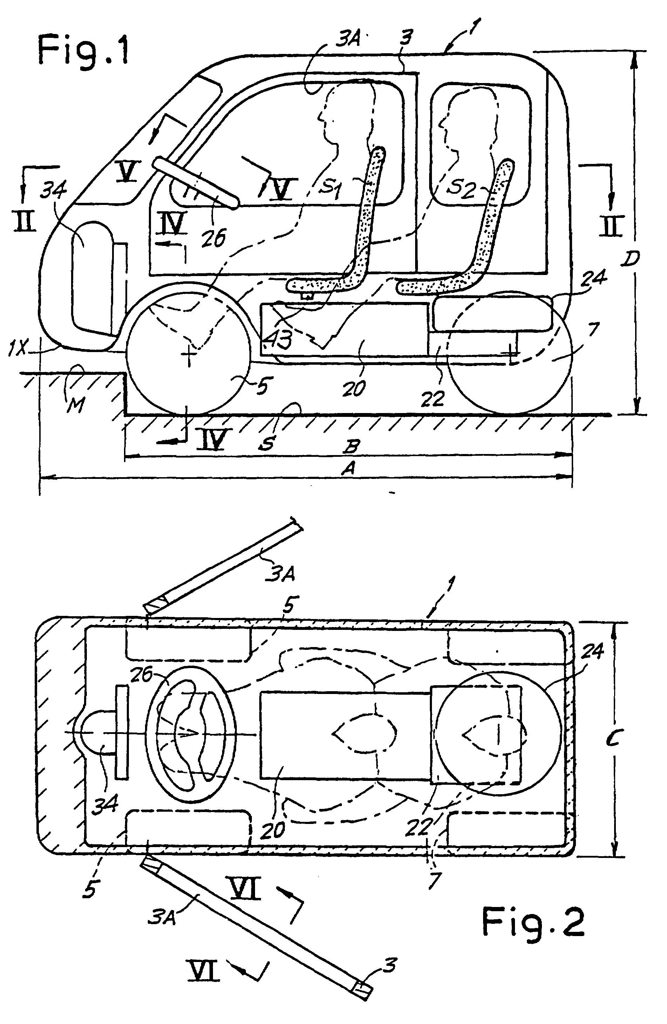

The two motors of the drive wheels 5 can be powered by batteries 20 located on the floor of the vehicle, beneath the two tandem passenger seats S1 and S2 (see the plan view in Fig. 2 and the side view in Fig. 1). The batteries are positioned such that they efficiently contribute to the stability of the vehicle when it is travelling around bends. The reference 22 denotes an electronic motor control unit which is positioned behind the batteries and on top of which the spare wheel 24 can be stored.

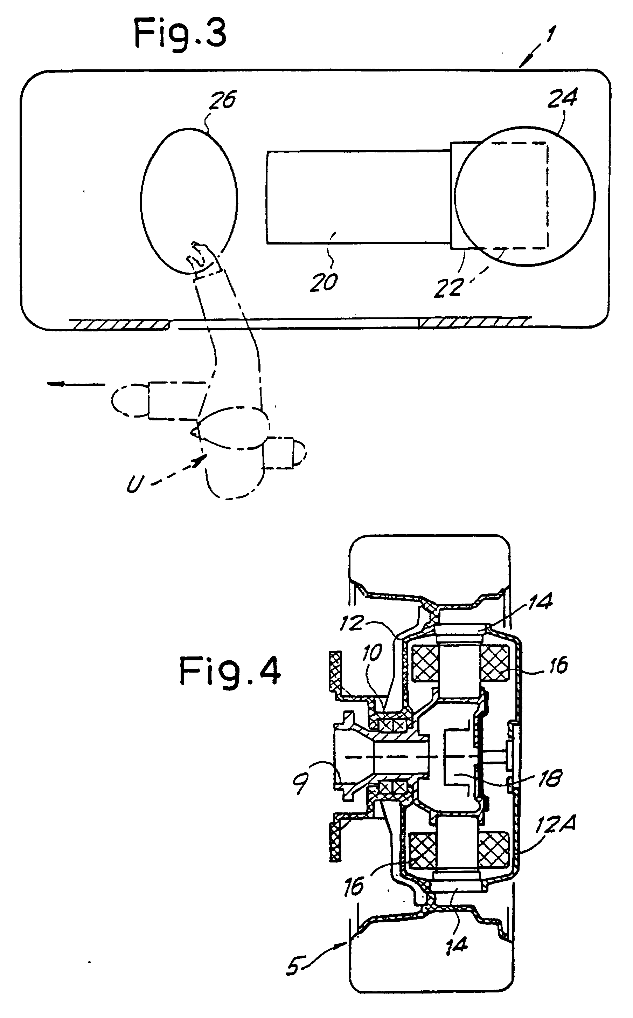

The reference 26 denotes the steering wheel which is conveniently located so that the passenger in the front seat of the pair of tandem seats can reach it easily. Together with the steering wheel, suitable instruments will be provided in a dashboard of what would be a fairly basic type. The steering wheel 26 is positioned such that it is particularly easy to access, even from outside the vehicle, via the window 3A in each of the doors 3. This layout means that once the driver (denoted by the reference U in Fig. 3) has dismounted, he can easily reach the steering wheel 26 from the outside in order to guide the vehicle alongside him. Located on the steering wheel 26 (see Fig. 5) are a series of controls including - in addition to the so-called horn 28 - two buttons designed to cause the vehicle to advance or stop, which are activated by means of a button 43 found on the driver's seat only once the driver has got up from his seat in order to get out of the vehicle.

Given that the vehicle has two doors, or at any rate two windows 3A, one on either side of the vehicle body, it would be useful to position the controls - for example the controls 28 and 30 - on both sides of the steering wheel 26, as can be seen in Fig. 5, so that they can comfortably be reached by the driver U once he has dismounted and irrespective of whether he is on the right or left-hand side of the vehicle. The electronic processing unit 22 and the electric motors will be made such that they allow the vehicle to advance at a reduced speed, comparable to a person's walking speed, and switch-overs will be provided so that the vehicle can pass from this reduced speed to a complete stop, the switch-over taking place each time the dismounted driver, as denoted by U in Fig. 3, pushes the button.

Thus the vehicle can be moved manually and effortlessly, even uphill, without any manoeuvrability problems since the means for manoeuvring and moving the vehicle are accessible from the outside through the side window and are within easy reach of the dismounted driver U. In this way, the vehicle can be manoeuvred in much the same way as a bicycle may be pushed, and without the need to balance it as is, on the contrary, necessary in the case of two-wheeled vehicles. It will thus be possible to move the vehicle, whether in order to travel through pedestrianized areas or in order to manoeuvre it while parking, if necessary.

With regards to parking, it would be advantageous (see Fig. 1) for the front part 1X of the passenger compartment to be slightly raised so that the vehicle can be parked perpendicularly to the traffic flow on the road, with its front wheels 5 up against the kerb M and all four wheels resting on the road surface S. The length B referred to above will be such as to allow the vehicle to be parked perpendicularly to the road edge, therefore allowing more space in which to park, even within the confines of the parking bays usually available - in accordance with road traffic regulations - for parking conventional vehicles parallel to the pavement M.

The supply and storage of energy may be ensured solely by the batteries 20, with the option of recharging them while the vehicle is parked, thereby giving the vehicle a range proportionate to the energy storage capacity of the batteries installed on board. The vehicle can also be fitted with an optional auxiliary generator unit 34 in the form of an internal combustion engine or a turbine engine connected to an alternator or, alternatively, in the form of fuel cells which use as their energy source a liquid fuel of the type currently sold in ordinary petrol stations or which could easily be sold there. Compared to the battery-only version, this solution - which is usually known as a hybrid embodiment - has the enormous advantage of eliminating the not insignificant problem of having to recharge the batteries since it is possible to fill up at any ordinary petrol station and only use the batteries when driving around town. The batteries would then normally be completely or partially recharged while driving out of town.

The optional auxiliary unit 34 that generates electricity using a liquid fuel would be installed in a hybrid-electric model which would not be restricted to the limited range of the battery-only model; this unit 34 could be located under the bonnet.

As mentioned above; the side window 3A (usually in the door 3) is relatively very wide in order to allow the driver to access the steering wheel once he has dismounted, when he has to reach the steering wheel through the window 3A. In order to have a wide window and not interfere with other vehicle components, a closure element can be provided which consists of a flexible transparent sheet 36, usually made of synthetic resin, that can be wound on to and unwound from a roller 38 which may be an elastic-return roller located beneath the window 3A, while the sheet 36 can be raised by means of a handle 40 until it reaches an upper locking device 42 in order to close off the window opening. Advantageously, the sheet 36 will be guided along guide strips 3B along the edges of the window so that, once deployed, i.e. unwound, in order to close off the window opening, the sheet 36 curves so as to form a sufficiently strong and rigid surface which is reinforced by the sloping front edge of the window 3A that acts as a guide for the sheet 36.

The electronic unit 22 that controls the electric motors also comprises a device for recharging the batteries, the power being supplied via an ordinary electric socket, for example via the domestic mains.

The front suspension can be a conventional MacPherson strut suspension. The rear suspension can be of the type in which the wheels are held by moving arms, with a spring system and shock absorbers.

Basically, the vehicle is in the form of a miniaturized car with four wheels, occupying a surface area in plan view less than one third that of a normal car and having a length that even enables it to be parked at right angles to the road edge rather than only parallel to it. Despite these size characteristics, passenger comfort is excellent because the number of passengers carried is limited to two (or one adult and two children) and because they sit in tandem, with one person sitting partly between the legs of the other when viewed from the side, positioned similarly to passengers on a motor scooter, although the car's structure is that of an enclosed vehicle. The seats are wide and of the type commonly used in motor cars and can even be fitted with headrests.

Moreover, in a modified embodiment, the rear seat can be removed and replaced with a comparment for transporting goods (van version).

From the description given above, it is clear that, as far as driving in urban areas and searching for parking spaces is concerned, the motor vehicle (car or van) of the invention offers the three characteristics typical of the bicycle, which are: the lack of both chemical and noise pollution; the small amount of space it takes up on the road, especially from the front-taking up the width of one person plus the space either side needed for the dynamic stability of two-wheeled vehicles; and the option of being easily moved manually around pedestrianized areas, and even uphill, once the driver has dismounted.

In order to move the car once the driver has dismounted, a control device can be provided that sets a predetermined constant vehicle speed, equivalent to walking speed (preceded and followed, respectively, by a suitable acceleration and deceleration phase) while, when the vehicle has come to a stop, a suitable braking mechanism is activated. While the vehicle is stopped the braking action may be provided by the (synchronous, direct-current) motor for a predetermined period of time, after which the handbrake is automatically engaged and the motor switched off.

As regards balancing requirements, it is quite possible to select tyres of a type and shape that have, as is usually the case, a coefficient of kinetic friction on dry roads which is not greater than 0.8 and, in exceptional cases, not greater than 0.9, in order to avoid the risk of this particularly narrow vehicle overturning when travelling around bends. In practice, tyres with a low coefficient of rolling friction which have been specially designed for use on electric vehicles can be employed.

The motor vehicle can also be produced in an open-top version, which will have at least one roll bar in the area corresponding to the roof of the vehicle in order to ensure the required passenger safety in the event of an accident involving the vehicle overturning.

As has already been stated, when parking the vehicle on the side of the road, it can be parked transversely to the road without projecting beyond the parking bay markings usually painted on the latter; this is made possible by the fact that the nose of the vehicle overhangs the pavement to a certain degree.

The lower rear part of the vehicle can be slightly rounded, with the bottom of the vehicle being covered with a plastic having a low coefficient of friction (such as, for example, so-called "Teflon") so that, in exceptional cases, the car can get down from a pavement which is relatively high with respect to the road surface without damaging the bodywork.

It should be understood that the drawing shows only an example which is given solely as a practical demonstration of the invention, the forms and arrangements of which can vary without thereby departing from the scope of the concept on which the said invention is based.

The presence of reference numerals in the appended claims has the sole purpose of facilitating the reading of the claims with reference to the description and to the drawing and does not limit the scope of protection represented by the claims.

## Claims

1. Four-wheeled motor. vehicle with passenger compartment (1) which, for the purposes of legislation relating to traffic and urban parking, can be compared to a bicycle and taking up approximately as much space on the road as a bicycle, including:
at least one seat (S1), and a space behind it for a second seat (S2) or for a comparment for transporting goods;
at least one drive wheel incorporating an electric motor/wheel unit powered by an accumulator means (20);
and **characterized in that** it comprises a steering wheel (26), which has means (30) for actuating said at least one motor/wheel unit, the actuating means being accessible from outside the vehicle and enabling said vehicle to be easily moved manually by the driver once he has dismounted.

2. Motor vehicle according to claim 1, **characterized in that** said actuating means (30) allow said motor vehicle to advance at a reduced speed, approximately equivalent to walking speed.

3. Motor vehicle according to claim 1 or 2 **characterized in that** it has sensor means (43) that detect whether or not a driver is sitting in said seat (S1) and activate said actuating means (30) if the driver is not sitting in said seat (S1).

4. Motor vehicle according to one or more of the preceding claims, **characterized in that** said at least one motor/wheel unit includes a synchronous motor whit permanent magnets.

5. Motor vehicle according to one or more of Claims 1 to 4 **characterized in that** it comprises two drive wheels.

6. Motor vehicle according to claim 5, **characterized in that** said drive wheels are the front steered wheels (5).

7. Motor vehicle according to one or more of the preceding claims, **characterized in that** it comprises a rear drive wheel (7).

8. Motor vehicle according to one or more of claims 1 to 4, **characterized in that** it has four drive wheels (5, 7).

9. Motor vehicle according to one or more of the preceding claims, **characterized in that** it has a large window (3A) in each side in order to allow the steering wheel (26) and said actuating means (30) to be accessed from the outside by the driver once he has dismounted.

10. Motor vehicle according to one or more of the preceding claims, **characterized in that** it comprises rechargeable electric batteries (20) located in the floor of the vehicle, under said seat (S1), a spare wheel (24) being stored horizontally behind said batteries.

11. Motor vehicle according to one or more of the preceding claims, **characterized in that** the front part of the vehicle is higher than the pavement and the length of the motor vehicle body is such that, when it is parked perpendicularly to the pavement, its maximum projection from the kerb into the road is less than the approximately two metres usually allowed in the street for parking.

12. Motor vehicle according to one or more of the preceding claims, **characterized in that** it comprises an auxiliary generator unit (34) in the form of an internal combustion engine connected to an alternator or, alternatively, in the form of fuel cells.

13. Motor vehicle according to one or more of the preceding claims, **characterized in that** it comprises two seats (S1, S2) positioned one behind the other, aligned along the length of the vehicle, the distance between the two seats being such that when two passengers are accommodated in the motor vehicle, one sits partly between the legs of the other.

14. Motor vehicle according to one or more of claims 1 to 12, **characterized in that** it comprises a single seat (S1) and, at the back, a boot.

## Patentansprüche

1. Vierrädriges Motorfahrzeug mit Fahrgastabteil (1), das bezüglich Verkehrsgesetzgebung und urbanem Parken mit einem Fahrrad verglichen werden kann und auf der Straße ungefähr genausoviel Raum einnimmt wie ein Fahrrad, mit:
wenigstens einem Sitz (S1) und einem dahinterliegenden Raum für einen zweiten Sitz (S2) oder für ein Abteil für Warentransport;
wenigstens einem Antriebsrad, in welchem ein Elektromotor/ eine Radeinheit, die durch eine Akkumulatoreinrichtung (20) gespeist ist, eingebaut ist,
und **dadurch gekennzeichnet, daß** das Fahrzeug aufweist ein Lenkrad (26), das Mittel (30) zum Betätigen der wenigstens einen Motor/Radeinheit hat, wobei die Betätigungsmittel von außerhalb des Fahrzeuges zugänglich sind, und ermöglichen, daß das Fahrzeug für den einmal ausgestiegenen Fahrer leicht manuell zu bewegen ist.

2. Motorfahrzeug nach Anspruch 1,
**dadurch gekennzeichnet, daß** die Betätigungsmittel (30) ermöglichen, daß das Motorfahrzeug mit einer reduzierten Geschwindigkeit, ungefähr gleich der Gehgeschwindigkeit, fährt.

3. Motorfahrzeug nach Anspruch 1 oder 2,
**dadurch gekennzeichnet, daß** Sensormittel (43) vorgesehen sind, die detektieren, ob auf dem Sitz (S1) ein Fahrer sitzt oder nicht, und die die Betätigungsmittel (30) aktivieren, wenn auf dem Sitz (S1) kein Fahrer sitzt.

4. Motorfahrzeug nach einem oder mehreren der vorstehenden Ansprüche,
**dadurch gekennzeichnet, daß** wenigstens eine Motor/Radeinheit einen Synchronmotor mit Permanentmagneten aufweist.

5. Motorfahrzeug nach einem oder mehreren der Ansprüche 1 bis 4,
**dadurch gekennzeichnet, daß** das Fahrzeug zwei Antriebsräder aufweist.

6. Motorfahrzeug nach Anspruch 5,
**dadurch gekennzeichnet, daß** die Antriebsräder die gelenkten Vorderräder (5) sind.

7. Motorfahrzeug nach einem oder mehreren der vorstehenden Ansprüche,
**dadurch gekennzeichnet, daß** ein hinteres Antriebsrad (7) vorgesehen ist.

8. Motorfahrzeug nach einem oder mehreren der Ansprüche 1 bis 4,
**dadurch gekennzeichnet, daß** das Fahrzeug vier Antriebsräder (5, 7) hat.

9. Motorfahrzeug nach einem oder mehreren der vorstehenden Ansprüche,
**dadurch gekennzeichnet, daß** es auf jeder Seite ein großes Fenster (3A) hat, um zu ermöglichen, daß das Lenkrad (26) und die Betätigungsmittel (30) für den einmal ausgestiegenen Fahrer von außen zugänglich sind.

10. Motorfahrzeug nach einem oder mehreren der vorstehenden Ansprüche,
**gekennzeichnet durch** wiederaufladbare elektrische Batterien (20), die im Boden des Fahrzeuges unter dem Sitz (S1) angeordnet sind, während ein Ersatzrad 24 horizontal hinter diesen Batterien aufgenommen ist.

11. Motorfahrzeug nach einem oder mehreren der vorstehenden Ansprüche,
**dadurch gekennzeichnet, daß** der vordere Teil des Fahrzeuges höher als der Bürgersteig ist und die Länge des Motorfahrzeugkörpers so ist, daß wenn er rechtwinklig zum Bürgersteig geparkt wird, sein maximales Hineinragen vom Bordstein in die Straße hinein weniger als die üblicherweise für Straßenparken zulässigen zwei Meter ist.

12. Motorfahrzeug nach einem oder mehreren der vorstehenden Ansprüche,
**dadurch gekennzeichnet, daß** es eine Hilfgeneratoreinheit (34) in Form eines internen Verbrennungsmotors, der an einen Wechselstrommotor angeschlossen ist, oder alternativ in Form von Brennstoffzellen, aufweist.

13. Motorfahrzeug nach einem oder mehreren der vorstehenden Ansprüche,
**gekennzeichnet durch** zwei Sitze (S1, S2) die hintereinander, in der Länge des Fahrzeuges ausgerichtet angeordnet sind, wobei der Abstand zwischen den zwei Sitzen so ist, daß, wenn in dem Motorfahrzeug zwei Fahrgäste aufgenommen sind, einer teilweise zwischen den Beinen des anderen sitzt.

14. Motorfahrzeug nach einem oder mehreren der Ansprüche 1 bis 12,
**gekennzeichnet durch** einen Einzelsitz (S1) und einen Kofferraum im rückwärtigen Teil.

## Revendications

1. Véhicule à moteur à quatre roues avec un compartiment passagers (1) qui, selon la législation sur la circulation et le stationnement urbain, peut être comparé à une bicyclette et qui occupe sur la route autant d'espace qu'une bicyclette, comprenant :
au moins un siège (S1), et un espace derrière celui-ci pour un second siège (S2) ou pour un compartiment destiné à transporter des marchandises;
au moins une roue de commande incorporant un moteur électrique/unité de roue actionnée par des moyens d'accumulateur (20);
**caractérisé en ce qu'**il comprend un volant de direction (26) qui comporte des moyens (30) pour actionner au moins un moteur/unité de roue, les moyens d'actionnement étant accessibles depuis l'extérieur du véhicule et permettant audit véhicule d'être facilement déplacé manuellement par le conducteur dès que celui-ci est descendu du véhicule.

2. Véhicule à moteur selon la revendication 1, **caractérisé en ce que** lesdits moyens d'actionnement (30) permettent de faire avancer ledit véhicule à moteur à vitesse réduite, correspondant approximativement à la vitesse de la marche à pied.

3. Véhicule à moteur selon la revendication 1 ou 2, **caractérisé en ce qu'**il comporte des moyens de capteur (43) qui détectent si un conducteur est assis ou non sur ledit siège (S1) et qui activent lesdits moyens d'actionnement (30) si le conducteur n'est pas assis sur ledit siège (S1).

4. Véhicule à moteur selon une ou plusieurs des revendications précédentes, **caractérisé en ce que** au moins un moteur/unité de roue comprend un moteur synchrone avec des aimants permanents.

5. Véhicule à moteur selon une ou plusieurs des revendications 1 à 4, **caractérisé en ce qu'**il comprend deux roues de commande.

6. Véhicule à moteur selon la revendication 5, **caractérisé en ce que** lesdites roues de commande sont les roues directionnelles avant (5).

7. Véhicule à moteur selon une ou plusieurs des revendications précédentes, **caractérisé en ce qu'**il comporte une roue de commande arrière (7).

8. Véhicule à moteur selon une ou plusieurs des revendications 1 à 4, **caractérisé en ce qu'**il comporte quatre roues de commande (5,7).

9. Véhicule à moteur selon une ou plusieurs des revendications précédentes, **caractérisé en ce qu'**il comporte une grande fenêtre (3A) de chaque côté afin de permettre l'accès au volant de direction (26) et aux dits moyens d'actionnement (30) depuis l'extérieur par le conducteur dès que celui-ci est descendu du véhicule.

10. Véhicule à moteur selon une ou plusieurs des revendications précédentes, **caractérisé en ce qu'**il comprend des batteries électriques rechargeables (20), situées dans le plancher du véhicule, sous ledit siège (S1), une roue de secours (24) étant placée horizontalement derrière lesdites batteries.

11. Véhicule à moteur selon une ou plusieurs des revendications précédentes, **caractérisé en ce que** la partie avant du véhicule est plus haute que le trottoir et la longueur de la carrosserie du véhicule à moteur est telle que lorsqu'il est stationné perpendiculairement au trottoir, son encombrement maximum à partir du bord du trottoir est inférieur aux deux mètres environ habituellement autorisés dans la rue pour le stationnement.

12. Véhicule à moteur selon une ou plusieurs des revendications précédentes, **caractérisé en ce qu'**il comprend une unité génératrice auxiliaire (34) sous forme d'un moteur à combustion interne raccordé à un alternateur ou en variante, sous forme de piles à combustible.

13. Véhicule à moteur selon une ou plusieurs des revendications précédentes, **caractérisé en ce qu'**il comprend deux sièges (S1,S2) positionnés l'un derrière l'autre, alignés sur la longueur du véhicule, la distance entre les deux sièges étant telle que lorsque deux passagers occupent le véhicule à moteur, l'un des passagers est en partie assis entre les jambes de l'autre passager.

14. Véhicule à moteur selon une ou plusieurs des revendications 1 à 12, **caractérisé en ce qu'**il comprend un siège unique (S1) et, à l'arrière, un coffre ou malle arrière.
